# EUROPEAN PATENT SPECIFICATION

(11) **EP 3 312 641 B1**
(45) Date of publication and mention of the grant of the patent: **24.02.2021**
(21) Application number: 17197099.9
(22) Date of filing: 18.10.2017
(51) Int. Cl.: G01V 5/00

(54) **METHOD, APPARATUS AND SYSTEM FOR SCANNING AND IMAGING**
VERFAHREN, VORRICHTUNG UND SYSTEM ZUR ABTASTUNG UND BILDGEBUNG
PROCÉDÉ, APPAREIL ET SYSTÈME DE BALAYAGE ET D'IMAGERIE

(30) Priority: 18.10.2016 CN 201610909414
(43) Date of publication of application: 25.04.2018
(73) Proprietor: Nuctech Company Limited, TongFang Building, Shuangqinglu, Haidian District Beijing 100084 (CN)
(72) Inventor: XU, Qiang, BEIJING, 100084 (CN); YU, Weifeng, BEIJING, 100084 (CN); MA, Yuan, BEIJING, 100084 (CN); HU, Yu, BEIJING, 100084 (CN); SUN, Shangmin, BEIJING, 100084 (CN); LIU, Shengxi, BEIJING, 100084 (CN)
(74) Representative: Cabinet Beau de Loménie

(56) References cited:
- WO-A1-2009/000157
- WO-A2-00/38494
- WO-A2-2006/082521
- WO-A2-2010/097621
- CN-A- 102 540 268
- US-A- 5 838 759

## Description

### TECHNICAL FIELD

The present disclosure relates to imaging techniques, and more particularly to a method, an apparatus, and a system for scanning and imaging.

### BACKGROUND

An existing contraband inspection technology is X-ray imaging inspection technology. X-ray imaging inspection technology is a widely used security inspection technology, and a lot of equipments based on X-ray imaging inspection technology can be seen at the airport, the railway station.

Another existing dangerous goods inspection technology is neutron inspection technology. For the neutron inspection technique, the neutron can react with the nucleus of the substance and release the characteristic γ-ray. According to the energy spectrum of the γ-ray, the element type of the substance to be analyzed can be determined.

US 5838759 describes an object-inspection system in which a container is first scanned using x-rays and, if suspect articles are identified, a second scan of the suspect regions is performed using neutrons. Techniques are applied to detect irregularities of motion of the container relative to the scanning systems.

There is currently a neutron-X-ray contraband inspection method capable of combining the X-ray imaging inspection techniques and the neutron inspection techniques described above to obtain these advantages of high resolution of the X-ray imaging inspection technique and element recognition ability of the neutron inspection technique. WO2009/000157 describes such a technique. In the neutron-X-ray contraband inspection method, the basic idea is to merge the neutron image and the X-ray image into an images so that the point corresponding to the same position of the inspected object in the neutron image and the X-ray image are completely coincident. Thus, for the merged image, each of the points includes the element distribution information and the density information of the object being inspected. An image produced by the neutron imaging technique is made of a certain number of columns, and an image produced by the x-ray imaging technique is made of a certain number of columns.

The existing neutron and X-ray image fusion method is that the number difference of image columns between the scanned images formed by the two kinds of radiation source is obtained by calculation according to the fixed distance between the two kinds of radiation inspection devices and constant speed. Two identical scanned images of the same number of columns are obtained after a subtraction operation, and then they are merged. However, such a method of image fusion is actually disadvantageous in the fact that, in the actual situation, the scanning speed of the system is not constant, and the scanned image formed after the image fusion cannot be completely merged, and there is a shadowed part. This will affect the performance of the equipment, and the scanned images of the object cannot be clearly and accurately shown.

Therefore, there is a need for a method and system capable of accurately merging neutron-X-ray images.

WO 2006/082521 describes an object scanning system which includes a shielding-material detector, a QR sensor and an x-ray sensor. This document mentions that images from the QR sensor and x-ray sensor may be superimposed, and that data from two detectors in the shielding-material detector may be merged, without providing details.

CN 102540268 describes a system in which two flying-point detection systems are used to scan a pedestrian to produce respective images of the front and back of the pedestrian. No mention is made of combining the images.

WO2010/097621 describes a system for scanning an object using an x-ray beam which is turned on when a sensor detects the front of an object being conveyed and turned off when a sensor detects the end of the object.

WO00/38494 describes a system in which conveyor belts are arranged to operate in a stepping fashion so that a board being scanned steps past the fields of view of two cameras and, thus, the board is photographed by the cameras. The optical axes of the two cameras are oriented at an angle to one another, so that the respective regions of the board that are photographed by the two cameras overlap with one another or are the same. Therefore, a mosaic image of the board can be created by stitching together the images generated by the two cameras.

The above-mentioned information disclosed in the background section is for the purpose of enhancing the understanding of the background of the present disclosure and may therefore include information that does not constitute prior art known to those of ordinary skill in the art.

### SUMMARY

The present disclosure provides a method, apparatus and system for scanning and imaging capable of enhancing the performance of equipments and clearly and accurately displaying a scanned image of an object.

Other features and advantages of the present disclosure will become apparent from the following detailed description, or in part, by practice of the present disclosure.

According to an aspect of the present disclosure, there is provided a method for scanning and imaging, according to claim 1, comprising: generating first inspection data correspondingly according to a first predetermined displacement of the object to be inspected by a first inspection device in a first inspection interval of the first inspection device between a first position and a third position; generating second inspection data correspondingly according to a second predetermined displacement of the object by a second inspection device in a second inspection interval of the second inspection device between a second position and a fourth position; converting the first inspection data into a first scanned image; converting the second inspection data into a second scanned image; and merging the first scanned image and the second scanned image; characterized in that the first predetermined displacement is equal to the second predetermined displacement, wherein the first inspection interval and the second inspection interval are spaced from each other, and wherein the first inspection interval is equal to the second inspection interval.

Because the first inspection device generates first inspection data correspondingly with the first predetermined displacement of the object, there is a relationship between the inspection data generated by the first inspection device and the spatial dimension of the object. Because the second inspection device generates second inspection data correspondingly with the second predetermined displacement of the object, there is a relationship between the inspection data generated by the second inspection device and the spatial dimension of the object. Accurate merging of the first and second scanned images is thereby facilitated.

Because the first predetermined displacement and the second predetermined displacement are equal, the number of columns in the first scanned image is the same as the number of columns in the second scanned image. Thereby, merging of the first and second scanned images is simplified.

In one exemplary embodiment of the present disclosure, the method further comprises: generating a displacement signal by a displacement sensor.

In one exemplary embodiment of the present disclosure, the displacement sensor is a rotary encoder.

In one exemplary embodiment of the present disclosure, the method further comprises: starting to generate a first trigger signal for the first inspection device based on the first predetermined displacement when the object reaches a first designated position.

In one exemplary embodiment of the present disclosure, the method further comprises: stopping the transmission of the first trigger signal when the object leaves a third designated position.

In one exemplary embodiment of the present disclosure, the method further comprises: starting to generate a second trigger signal for the second inspection device based on the second predetermined displacement when the object reaches a second designated position.

In one exemplary embodiment of the present disclosure, the method further comprises: stopping the transmission of the second trigger signal when the object leaves a fourth designated position.

In one exemplary embodiment of the present disclosure, the first inspection data and the second inspection data are column data.

According to another aspect of the present disclosure, there is provided an apparatus for scanning and imaging, according to claim 9, comprising: a first inspection module for generating first inspection data correspondingly according to a first predetermined displacement of the object to be inspected in a first inspection interval of a first inspection device between a first position and a third position; second inspection module for generating second inspection data correspondingly according to a second predetermined displacement of the object in a second inspection interval of a second inspection device between a second position and a fourth position; and an imaging module for converting the first inspection data into a first scanned image, converting the second inspection data into a second scanned image, and merging the first scanned image and the second scanned image; characterized in that the first and second inspection modules are arranged to generate said first and second inspection data according to first and second predetermined displacements which are equal in magnitude, wherein the first inspection interval and the second inspection interval are spaced from each other, and wherein the first inspection interval is equal to the second inspection interval.

In one exemplary embodiment of the present disclosure, the above apparatus further comprises: a displacement module for generating a first displacement signal and a second displacement signal based on the object movement information.

In one exemplary embodiment of the present disclosure, the apparatus further comprises: a control module for acquiring the first predetermined displacement and the second predetermined displacement of the object; starting to generate a first trigger signal for the first inspection device based on the first predetermined displacement when the object reaches the first designated position and has not left a third designated position; and starting to generate a second trigger signal for the second inspection device based on the second predetermined displacement when the object reaches the second designated position and has not left a fourth designated position.

According to yet another aspect of the present disclosure, there is provided a system for scanning and imaging, according to claim 12, comprising: an apparatus as described above; an encoder for obtaining displacement information of the object to be inspected; a controller for controlling the inspection of the inspection device based on the displacement information of the object; and a conveyor for transporting the object.

According to the method for scanning and imaging of the present invention, it is possible to improve the performance of the equipment and to clearly and accurately exhibit the image of the object by solving the problem of mismatching when several kinds of ray images are merged.

### BRIEF DESCRIPTION OF THE DRAWINGS

Figure 1 is a block diagram of a system for scanning and imaging shown in accordance with an exemplary embodiment.
Figure 2 is a flow chart of a method for scanning and imaging shown in accordance with an exemplary embodiment.
Figure 3 is a flow chart of another method for scanning and imaging shown in accordance with an exemplary embodiment.
Figure 4 is a flow chart of yet another method for scanning and imaging shown in accordance with an exemplary embodiment.
Figure 5 is a block diagram of yet another apparatus for scanning and imaging shown in accordance with an exemplary embodiment.

Description of the drawing reference numerals: system for scanning and imaging 10; conveyor 101; encoder 103; controller 105; inspection device 107; imaging device 109.

### DETAILED DESCRIPTION

Exemplary embodiments will now be described more fully with reference to the accompanying drawings. However, the exemplary embodiments may be embodied in many forms and should not be construed as limited to the examples set forth herein; rather, these embodiments are provided so that the present disclosure will be more fully and complete, and the teachings of exemplary embodiments will be conveyed comprehensively to those skilled in the art. The drawings are merely illustrative of the present disclosure and are not necessarily to scale. The same reference numerals in the drawings denote the same or similar parts, and thus repeated description thereof will be omitted.

In addition, the features, structures, or characteristics described may be combined in one or more embodiments in any suitable manner. In the following description, numerous specific details are set forth to give a full understanding of the embodiments of the present disclosure. However, those skilled in the art will appreciate that one or more of the particular details may be omitted by practicing the technical solution of the present disclosure, or other methods, components, devices, steps, and the like may be employed. In other instances, well-known structures, methods, devices, implementations, or operations are not shown or described in detail to avoid distracting thus obscuring aspects of the present disclosure.

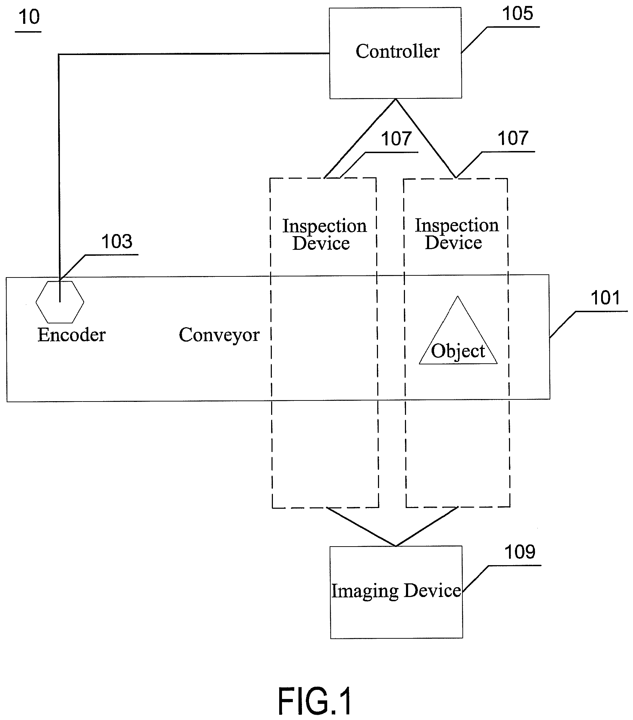

FIG.1 is a block diagram of a system for scanning and imaging shown in accordance with an exemplary embodiment. As shown in FIG. 1, the system 10 for scanning and imaging includes a conveyor 101, an encoder 103, a controller 105, at least two inspection devices 107, and an imaging device 109.

Since the scanning speed of the entire imaging system on the object to be inspected is not constant, and the original image merging method is based on calculation according to the fixed distance between the two kinds of radiation inspection devices and constant speed, that is, it is not accurate to use the constant speed to calculate the number of columns of the two image phases. The present disclosure controls the relationship between the moving distance of the scanned goods and the number of columns of the scanned image so that the ray inspection device produces a fixed number of scanning columns whenever the object to be inspected is moved for a unit distance, and finally the resulting number of columns of the scanned images is only related to the length of the object itself.

The conveyor 101 is a device for carrying and transmitting the object to be inspected, and the object is relatively fixed to the transmission system during transmission.

The encoder 103 is a device for acquiring the displacement information of the object to be inspected. The encoder rotates as the object moves on the conveyor, and generates a signal when it is rotated. Since there is no relative displacement between the object and the conveyor, the number of signals produced for each distance the object moves is a fixed number.

The controller 105 is a device for controlling the inspection device. The controller reads the pulses transmitted by the encoder, calculates the pulse displacement into the displacement quantity, then generates the corresponding control signal, and controls the inspection device to generate the radiation.

The inspection device 107 is a device for generating inspection rays and collecting the inspection data, and complete scan data of the radiography can be obtained when the object to be inspected passes through any one of the inspection devices.

The imaging device 109 is a device for receiving scan data from the inspection device and converting the data into an image. In the embodiment, the object to be inspected sequentially passes through two inspection devices to complete a scan process, and the imaging device merges the images obtained by the scanning of the two inspection devices to generate the final image.

The communication connection among the conveyor 101, the encoder 103, the controller 105, the inspection device 107, and the imaging device 109 may be a wired connection or a wireless connection, and is not limited herein.

It is to be noted that the system 10 for scanning and imaging is merely illustrative and not restrictive of the present disclosure.

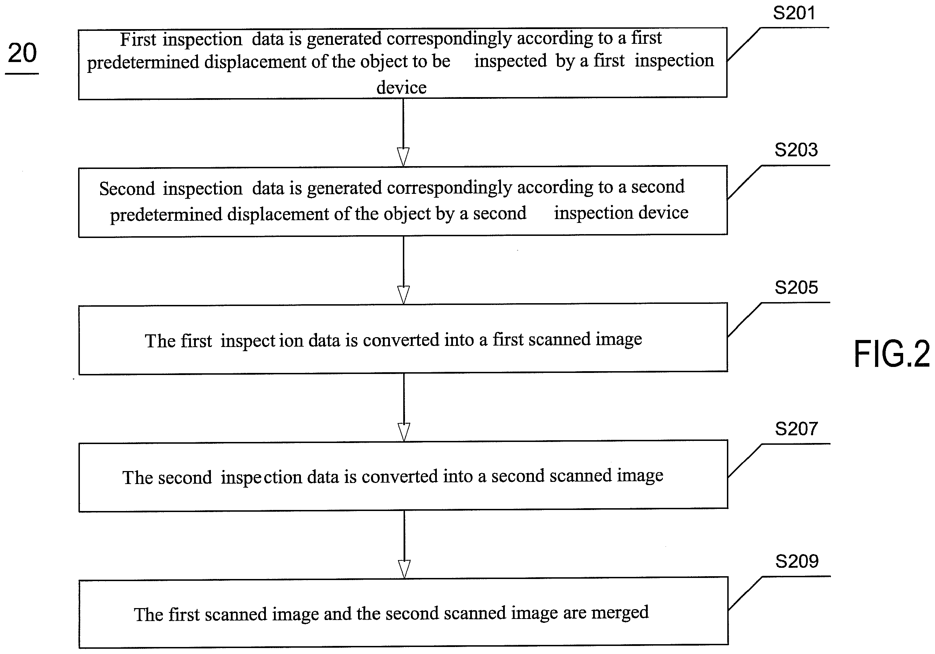

FIG.2 is a flow chart of a method for scanning and imaging shown in accordance with an exemplary embodiment.

FIG.2 is a flow diagram of a method for scanning and imaging shown in accordance with an exemplary embodiment. The method can be applied to the system shown in Fig. 1. As shown in FIG.2, the method 20 comprises the following steps.

In step S201, first inspection data is generated correspondingly according to a first predetermined displacement of the object to be inspected by a first inspection device.

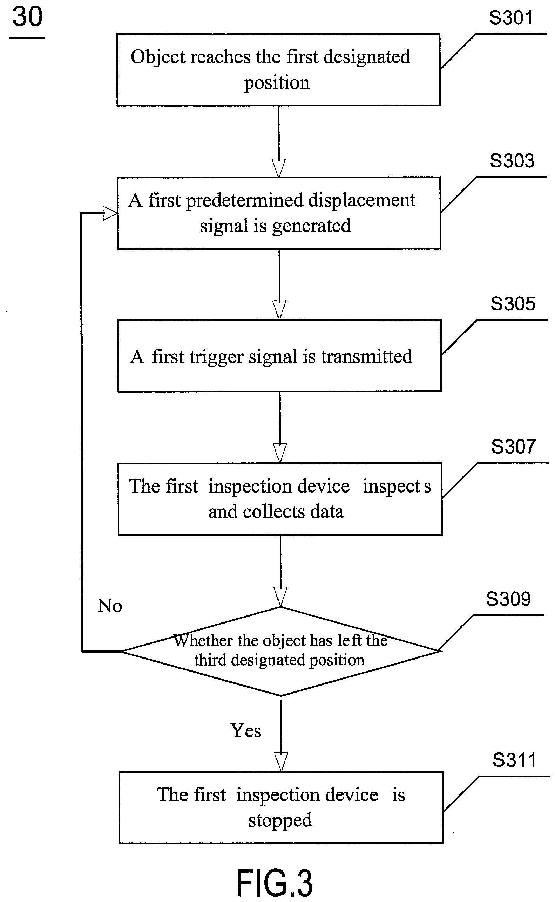

The controller calculates a first predetermined displacement based on the system setting, generates a corresponding control signal based on the first predetermined displacement, and controls the first inspection device to detect and collect the inspection data. FIG.3 shows specific steps and information. In the present embodiment, a displacement signal is generated by a displacement sensor, which is a rotary encoder and can be a "Beckhoff incremental encoder" and the like. The encoder rotates as the object moves on the conveyor and generates a signal when it rotates. A certain number of pulse signals are generated for each distance the object moves. Since there is no relative displacement between the object and the conveyor, the number of signals produced for each distance the object moves is a fixed number. In the present embodiment, the first inspection device may be an X-ray inspection device.

In step S203, second inspection data is generated correspondingly according to a second predetermined displacement of the object by a second inspection device.

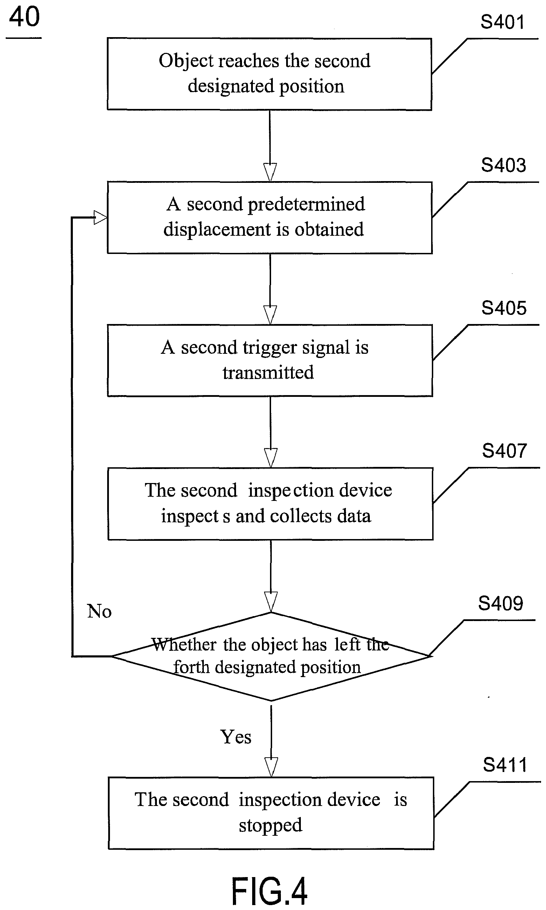

The controller calculates a second predetermined displacement based on the system settings, generates a corresponding control signal based on the second predetermined displacement, and controls the second inspection device to detect and collect the inspection data. FIG.4 shows specific steps and information. In the present embodiment, the second inspection device may be a neutron beam inspection device.

In the invention, the first predetermined displacement is equal to the second predetermined displacement. For example, the first predetermined displacement and the second predetermined displacement are both W, wherein W is a preset value in the system. That is, an inspection operation is performed for each W distance the object moves in the first inspection device inspection interval (between the first designated position and the third designated position), and an inspection operation is also performed for each W distance the object moves in the second inspection device inspection interval (between the second designated position and the fourth designated position).

In step S205, the first inspection data is converted into a first scanned image.

Since an inspection operation is performed for each first predetermined displacement the object moves, a set of inspection data is obtained. In the present embodiment, the first inspection data inspected and acquired in the first inspection operation is used as a first column of a first scanned image. The first inspection data obtained by scanning is sequentially arranged, and the first ray data acquired in the nth time is used as the nth column of the first scanned image, wherein n is a positive integer greater than or equal to one.

In step S207, the second inspection data is converted into a second scanned image.

Since an inspection operation is performed for each second predetermined displacement the object moves, a set of inspection data is obtained. In the present embodiment, the second inspection data inspected and acquired in the first inspection operation is used as the first column of the second scanned image. The second inspected data obtained by scanning is sequentially arranged, and the first ray data acquired in the mth inspection operation is used as the mth column of the second scanned image, wherein m is a positive integer greater than or equal to one.

In step S209, the first scanned image and the second scanned image are merged.

After the object to be inspected passes through the first inspection device, a set of complete inspection data is obtained, and a scanned image of the object is obtained after the data is sent to the imaging device. Similarly, a scanned image of the object is also obtained after the object passes through the second inspection device.

In the invention, since the first predetermined displacement is equal to the second predetermined displacement, that is, in the first inspection device inspection interval and the second inspection device inspection interval, the object is scanned for the same number of times. And, regardless of whether the object to be inspected passes through the X-ray system or the neutron ray system, the number of columns of the resulting scanned image is only related to the length of itself. That is, n = m. Therefore, the number of columns of the first scanned image is equal to that of the second scanned image. The first scanned image and the second scanned image can be directly merged.

The method for scanning and imaging of the present embodiment of the present invention overcomes the problem of inconsistency in the number of columns of the scanning images in the scanning process because of the speed changes. In scanning and imaging with multiple inspection devices, the problem of mismatching when merging multiple images can be effectively solved, and thus the use performance of the product is improved and the competitiveness of the product is increased.

It is to be clearly understood that the present disclosure describes how specific examples are formed and used, but the principles of the present disclosure are not limited to any of those examples. In contrast, these principles can be applied to many other embodiments, based on the teachings of the present disclosure.

FIG.3 is a flow chart of another method for scanning and imaging shown in accordance with an exemplary embodiment. This figure illustrates a specific method for obtaining the first inspection data, which can be applied to the system shown in Fig. 1 or as a supplement to the method described in Fig. 2. As shown in FIG.3, the method 30 comprises the following steps.

In step S301, the object reaches the first designated position.

As shown in Fig. 1, the object is conveyed on the conveyor, and its position is determined by the sensor so as to determine whether the object has reached the first designated position. The first designated position is a preset value, which can be set in the initial settings of the system, and subsequently be adjusted according to the actual situation during the use process of the system for scanning and imaging. In the present embodiment, the first designated position is located at the point A cm before the object passes through the first inspection device. The arrival of the object at the first designated position means that any side or any face of the object reaches the first designated position.

In step S303, a first predetermined displacement signal is generated.

The controller continuously receives the pulse signal from the encoder during the operation of the entire system. A first predetermined displacement is generated according to the system settings. For example, a first displacement signal is generated for every p pulse signals, wherein p is a positive integer greater than or equal to one. The controller calculates the number of pulses obtained, and thus obtains the first predetermined displacement.

In step S305, the first trigger signal is transmitted.

After the controller has calculated and obtained the first predetermined displacement, the controller then generates the first trigger signal and sends the signal to the first inspection device.

In step S307, the first inspection device detects and collects data.

After the first inspection device receives the first trigger signal, the object to be inspected is being inspected, and the first inspection data is collected and transmitted to the imaging device.

In step S309, it is determined whether the object has left the third designated position.

The position of the object is continued to be determined by the sensor to determine whether or not the object has left the third designated position. The third designated position is a pre-set value, which can be set in the initial settings of the system, and subsequently be adjusted according to the actual situation during the use process of the system for scanning and imaging. In the present embodiment, the third designated position is located at the point B cm after the object passes through the first inspection device. The departure of the object at the third designated position means that all sides or all faces of the object have left the third designated position.

If the object has not left the third designated position, the process returns to step S303, and if the object has left the third designated position, step S311 is performed.

In step S311, the first inspection device is stopped.

The object completely leaves the third designated position, i.e. it represents that the object leaves the inspection space of the first inspection device and the first inspection device stops working.

FIG.4 is a flow chart of another method for scanning and imaging shown in accordance with an exemplary embodiment. This method illustrates a specific method for obtaining the second inspection data, which can be applied to the system shown in Fig. 1 or as a supplement to the method described in FIG. 2. As shown in FIG.4, the method 40 comprises the steps as described as follows.

In step S401, the object reaches the second designated position.

As shown in Fig. 1, the object is conveyed on the conveyor, and its position is determined by the sensor to determine whether the object has reached the second designated position. The second designated position is a preset value, which can be set in the initial settings of the system, and subsequently be adjusted according to the actual situation during the use process of the system for scanning and imaging. In the present embodiment, the second designated position is located at the point C cm before the object passes through the second inspection device. The arrival of the object at the second designated position has the meaning that any side or any face of the object reaches the second designated position.

In step S403, a second predetermined displacement is obtained.

The controller continuously receives the pulse signal from the encoder during the operation of the entire system. A second predetermined displacement is generated according to the system setting, for example, a second displacement signal is generated for every q pulse signal, and q is a positive integer greater than or equal to one. The controller calculates to obtain the number of pulses, and thus obtains the second predetermined displacement.

In step S405, the second trigger signal is transmitted.

After the controller has calculated and obtained the second predetermined displacement, the controller then generates the second trigger signal and sends the signal to the second inspection device.

In step S407, the second inspection device detects and collects data.

After the second inspection device receives the second trigger signal, the object to be inspected is being inspected, and the second inspection data is collected and transmitted to the imaging device.

In step S409, it is determined whether or not the object has left the forth designated position.

The position of the object is continued to be determined by the sensor so as to determine whether or not the object leaves the fourth designated position. The fourth designated position is a preset value, which can be set in the initial settings of the system, and subsequently be adjusted according to the actual situation during the use process of the system for scanning and imaging. In the present embodiment, the fourth designated position is located at the point D cm after the object passes through the second inspection device. The departure of the object at the fourth designated position has the meaning that all sides or all faces of the object have left the fourth designated position.

If the object has not left the fourth designated position, the process returns to step S403, and if the object has left the fourth designated position, step 4311 is performed.

In step S411, the second inspection device is stopped.

The object completely leaves the fourth designated position, i.e. it represents that the object leaves inspection space of the second inspection device and the second inspection device stops working.

Those skilled in the art will appreciate that all or part of the steps to implement the above embodiments can be implemented as computer programs executed by a CPU. When the computer program is executed by a CPU, the above-described functions defined by the above-described method provided by the present disclosure can be executed.

The program may be stored in a computer-readable storage medium, which may be a read-only memory, a magnetic disk, an optical disk, or the like.

In addition, it is to be noted that the above drawings are merely illustrative of the processing included in the method according to the exemplary embodiments of the present disclosure and are not intended to be limiting. It is easy to understand that the processing shown in the above figures does not indicate or limit the chronological order of these processes. In addition, it is also easy to understand that these processes may be performed, for example, synchronously or asynchronously in a plurality of modules.

The following is an embodiment of the apparatus of the present disclosure, which may be used to carry out the method embodiments of the present disclosure. For the details that are not disclosed in the embodiments of the present disclosure, reference is made to the method embodiments of the present disclosure.

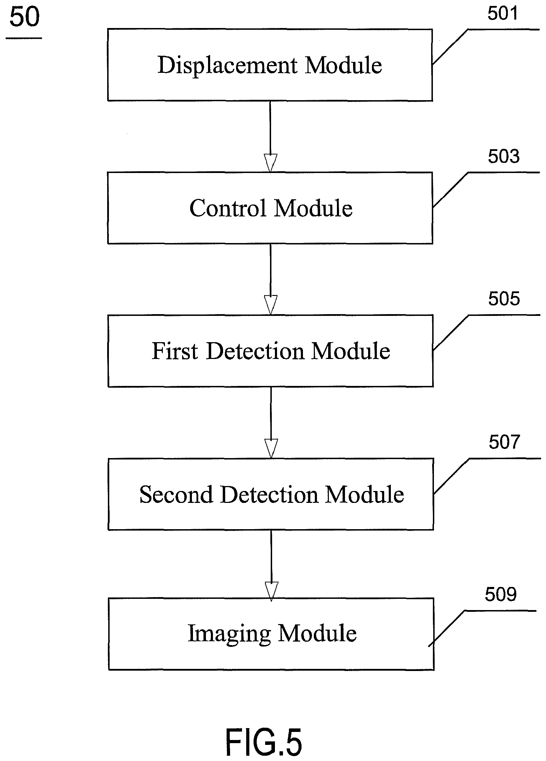

FIG.5 is a block diagram of yet another apparatus for scanning and imaging shown in accordance with an exemplary embodiment. As shown in FIG.5, the apparatus 50 includes a displacement module 501, a control module 503, a first inspection module 505, a second inspection module 507, and an imaging module 509.

The displacement module 501 is used to generate a first displacement signal and a second displacement signal based on the object movement information.

The control module 503 is used to acquire the first predetermined displacement information and the second predetermined displacement information of the object; begins to generate a first trigger signal for the first inspection device based on the first predetermined displacement signal when the object reaches a first designated position; and begins to generate a second trigger signal for the second inspection device based on the second predetermined displacement signal when the object reaches a second designated position.

The first inspection module 505 generates the first inspection data correspondingly according to the first predetermined displacement of the object.

The second inspection module 507 generates the second inspection data correspondingly according to the second predetermined displacement of the object.

The imaging module 509 is used to convert the first ray data into a first scanned image, convert the second ray data into a second scanned image, and merge the first scanned image and the second scanned image.

The apparatus for scanning and imaging in the embodiments of the present invention overcomes the problem of inconsistency in the number of columns of the scanning images in the scanning process because of the speed changes. When multiple inspection devices are used for scanning and imaging, the problem of mismatching when merging multiple images can be effectively solved to improve the use performance of the product and increase the competitiveness of the product.

It is to be noted that the block diagram shown in the above figures is a functional entity and does not necessarily have to correspond to a physically or logically independent entity. These functional entities may be implemented in software form or implemented in one or more hardware modules or integrated circuits, or these functional entities are implemented in different networks and/or processor devices and/or micro-controllers.

It will be readily understood by those skilled in the art from the description of the above embodiments that the exemplary embodiments described herein may be implemented by software or by means of software in conjunction with the necessary hardware. Thus, the technical solution according to the embodiments of the present disclosure may be embodied in the form of a software product which may be stored on a nonvolatile storage medium (which may be a CD-ROM, a U disk, a mobile hard disk, etc.) or on a network, comprising a number of instructions to enable a computing device (which may be a personal computer, a server, a mobile terminal, or a network device, etc.) to perform a method according to an embodiment of the present disclosure.

Other embodiments of the present disclosure will be readily apparent to those skilled in the art upon consideration of the specification and practice of the invention disclosed herein. This application is intended to cover any variations, uses, or adaptations of the present disclosure that follow the present disclosure and include the common knowledge or conventional techniques disclosed in this disclosure without departing from the present disclosure, which is defined by the appended claims. The specification and examples are to be regarded as illustrative only, and the scope of the disclosure is indicated by the following claims.

It is to be understood that the present disclosure is not limited to the precise constructions described above and illustrated in the accompanying drawings, and that various modifications and changes may be made without departing from the scope thereof. The scope of the present disclosure is limited only by the appended claims.

## Claims

1. A method for scanning and imaging, comprising:
generating first inspection data correspondingly according to a first predetermined displacement of an object to be inspected by a first inspection device in a first inspection interval of the first inspection device between a first position and a third position (S201);
generating second inspection data correspondingly according to a second predetermined displacement of the object by a second inspection device in a second inspection interval of the second inspection device between a second position and a fourth position (S203);
converting the first inspection data into a first scanned image (S205);
converting the second inspection data into a second scanned image (S207); and
merging the first scanned image and the second scanned image (S209);
wherein the first predetermined displacement is equal to the second predetermined displacement,
**characterized in that** the first inspection interval and the second inspection interval are spaced from each other, and
wherein the first inspection interval is equal to the second inspection interval.

2. The method according to claim 1, further comprising: generating a displacement signal using a displacement sensor (S303, S403).

3. The method according to claim 2, wherein the displacement sensor is a rotary encoder.

4. The method according to claim 1, further comprising: starting to generate a first trigger signal for the first inspection device based on the first predetermined displacement when the object reaches a first designated position (S305).

5. The method according to claim 4, further comprising: stopping the transmission of the first trigger signal when the object leaves a third designated position (S311).

6. The method according to claim 1, further comprising: starting to generate a second trigger signal for the second inspection device based on the second predetermined displacement when the object reaches a second designated position (S405).

7. The method according to claim 6, further comprising: stopping the transmission of the second trigger signal when the object leaves a fourth designated position (S411).

8. The method according to claim 1, wherein the first inspection data and the second inspection data are column data.

9. An apparatus (50) for scanning and imaging, comprising:
a first inspection module (505) for generating first inspection data correspondingly according to a first predetermined displacement of the object to be inspected in a first inspection interval of a first inspection device (107) between a first position and a third position;
a second inspection module (507) for generating second inspection data correspondingly according to a second predetermined displacement of the object in a second inspection interval of a second inspection device (107) between a second position and a fourth position; and
an imaging module (509) for converting the first inspection data into a first scanned image, converting the second inspection data into a second scanned image, and merging the first scanned image and the second scanned image;
wherein the first and second inspection modules (505,507) are arranged to generate said first and second inspection data according to first and second predetermined displacements which are equal in magnitude,
**characterized in that**
the first inspection interval and the second inspection interval are spaced from each other, and
wherein the first inspection interval is equal to the second inspection interval.

10. The apparatus according to claim 9, further comprising: a displacement module (501) for generating a displacement signal based on the object movement information.

11. The apparatus according to claim 9 or 10, further comprising: a control module (503) for acquiring the first predetermined displacement and the second predetermined displacement of the object; starting to generate a first trigger signal for the first inspection device based on the first predetermined displacement when the object reaches the first designated position and has not left a third designated position; and starting to generate a second trigger signal for the second inspection device based on the second predetermined displacement when the object reaches the second designated position and has not left a fourth designated position.

12. A system (10) for scanning and imaging, comprising:
an apparatus according to claim 9;
an encoder (103) for obtaining displacement information of the object to be inspected;
a controller (105) for controlling the inspection of the inspection device based on the displacement information of the object; and
a conveyor (101) for transporting the object.

## Patentansprüche

1. Verfahren zum Scannen und Abbilden, umfassend:
Erzeugen erster Inspektionsdaten entsprechend einer ersten vorbestimmten Verschiebung eines zu inspizierenden Objekts mittels einer ersten Inspektionsvorrichtung in einem ersten Inspektionsintervall der ersten Inspektionsvorrichtung zwischen einer ersten Position und einer dritten Position (S201),
Erzeugen von zweiten Inspektionsdaten des Objekts entsprechend einer zweiten vorbestimmten Verschiebung mittels einer zweiten Inspektionsvorrichtung in einem zweiten Inspektionsintervall der zweiten Inspektionsvorrichtung zwischen einer zweiten Position und einer vierten Position (S203),
Konvertieren der ersten Inspektionsdaten in ein erstes gescanntes Bild (S205),
Konvertieren der zweiten Inspektionsdaten in ein zweites gescanntes Bild (S207) und
Zusammenführen des ersten gescannten Bildes und des zweiten gescannten Bildes (S209),
wobei die erste vorbestimmte Verschiebung gleich der zweiten vorbestimmten Verschiebung ist,
**dadurch gekennzeichnet, dass** das erste Inspektionsintervall und das zweite Inspektionsintervall voneinander beabstandet sind, und
wobei das erste Inspektionsintervall gleich dem zweiten Inspektionsintervall ist.

2. Verfahren nach Anspruch 1, ferner umfassend: Erzeugen eines Verschiebungssignals unter Verwendung eines Verschiebungssensors (S303, S403).

3. Verfahren nach Anspruch 2, wobei der Verschiebungssensor ein Drehgeber ist.

4. Verfahren nach Anspruch 1, ferner umfassend: Beginnen mit dem Erzeugen eines ersten Auslösesignals für die erste Inspektionsvorrichtung auf der Grundlage der ersten vorbestimmten Verschiebung, wenn das Objekt eine bestimmte erste Position erreicht (S305).

5. Verfahren nach Anspruch 4, ferner umfassend: Stoppen der Übertragung des ersten Auslösesignals, wenn das Objekt eine bestimmte dritte Position verlässt (S311).

6. Verfahren nach Anspruch 1, ferner umfassend: Beginnen mit dem Erzeugen eines zweiten Auslösesignals für die zweite Inspektionsvorrichtung auf der Grundlage der zweiten vorbestimmten Verschiebung, wenn das Objekt eine bestimmte zweite Position erreicht (S405).

7. Verfahren nach Anspruch 6, ferner umfassend: Stoppen der Übertragung des zweiten Auslösesignals, wenn das Objekt eine bestimmte vierte Position verlässt (S411).

8. Verfahren nach Anspruch 1, wobei die ersten Inspektionsdaten und die zweiten Inspektionsdaten Spaltendaten sind.

9. Vorrichtung (50) zum Scannen und Abbilden, umfassend:
ein erstes Inspektionsmodul (505) zum Erzeugen erster Inspektionsdaten entsprechend einer ersten vorbestimmten Verschiebung eines zu inspizierenden Objekts in einem ersten Inspektionsintervall einer ersten Inspektionsvorrichtung (107) zwischen einer ersten Position und einer dritten Position,
ein zweites Inspektionsmodul (507) zum Erzeugen zweiter Inspektionsdaten entsprechend einer zweiten vorbestimmten Verschiebung des Objekts in einem zweiten Inspektionsintervall einer zweiten Inspektionsvorrichtung (107) zwischen einer zweiten Position und einer vierten Position, und
ein Abbildungsmodul (509) zum Konvertieren der ersten Inspektionsdaten in ein erstes gescanntes Bild, zum Konvertieren der zweiten Inspektionsdaten in ein zweites gescanntes Bild und zum Zusammenführen des ersten gescannten Bildes und des zweiten gescannten Bildes,
wobei die ersten und zweiten Inspektionsmodule (505, 507) dazu angeordnet sind, die ersten und zweiten Inspektionsdaten entsprechend ersten und zweiten vorbestimmten Verschiebungen erzeugen, die in der Größe gleich sind,
**dadurch gekennzeichnet, dass** das erste Inspektionsintervall und das zweite Inspektionsintervall voneinander beabstandet sind, und
wobei das erste Inspektionsintervall gleich dem zweiten Inspektionsintervall ist.

10. Vorrichtung nach Anspruch 9, ferner umfassend: ein Verschiebungsmodul (501) zum Erzeugung eines Verschiebungssignals auf der Grundlage von Objektbewegungsinformationen.

11. Vorrichtung nach Anspruch 9 oder 10, ferner umfassend: ein Steuermodul (503) zum Erfassen der ersten vorbestimmten Verschiebung und der zweiten vorbestimmten Verschiebung des Objekts, Starten des Erzeugens eines ersten Auslösesignals für die erste Inspektionsvorrichtung auf der Grundlage der ersten vorbestimmten Verschiebung, wenn das Objekt eine bestimmte erste Position erreicht und eine bestimmte dritte Position nicht verlassen hat, und Starten des Erzeugens eines zweiten Auslösesignals für die zweite Inspektionsvorrichtung auf der Grundlage der zweiten vorbestimmten Verschiebung, wenn das Objekt eine bestimmte zweite Position erreicht und eine bestimmte vierte Position nicht verlassen hat.

12. System (10) zum Scannen und Abbilden, umfassend:
eine Vorrichtung nach Anspruch 9,
einen Encoder (103) zum Erhalten von Verschiebungsinformationen des zu untersuchenden Objekts,
einen Controller (105) zum Steuerung der Inspektion der Inspektionsvorrichtung auf der Grundlage der Verschiebungsinformation des Objekts und
einen Förderer (101) zum Transportieren des Objekts.

## Revendications

1. Procédé de balayage et d'imagerie, comprenant les étapes suivantes :
produire des premières données de contrôle en fonction d'un premier déplacement prédéterminé d'objet à contrôler au moyen d'un premier dispositif de contrôle dans un premier intervalle de contrôle du premier dispositif de contrôle, entre une première position et une troisième position (S201) ;
produire des secondes données de contrôle en fonction d'un second déplacement prédéterminé de l'objet au moyen d'un second dispositif de contrôle dans un second intervalle de contrôle du second dispositif de contrôle, entre une deuxième position et une quatrième position (S203) ;
convertir les premières données de contrôle en une première image de balayage (S205) ;
convertir les secondes données de contrôle en une seconde image de balayage (S207) ; et
fusionner la première image de balayage et la seconde image de balayage (S209) ;
dans lequel le premier déplacement prédéterminé est égal au second déplacement prédéterminé,
**caractérisé en ce que** :
le premier intervalle de contrôle et le second intervalle de contrôle sont espacés l'un de l'autre, et
dans lequel le premier intervalle de contrôle est égal au second intervalle de contrôle.

2. Procédé selon la revendication 1, comprenant en outre l'étape suivante : produire un signal de déplacement à l'aide d'un capteur de déplacement (S303, S403).

3. Procédé selon la revendication 2, dans lequel le capteur de déplacement est un codeur rotatif.

4. Procédé selon la revendication 1, comprenant en outre l'étape suivante : commencer à produire un premier signal de déclenchement du premier dispositif de contrôle sur la base du premier déplacement prédéterminé, lorsque l'objet atteint une première position désignée (S305).

5. Procédé selon la revendication 4, comprenant en outre l'étape suivante : cesser la transmission du premier signal de déclenchement lorsque l'objet quitte une troisième position désignée (S311).

6. Procédé selon la revendication 1, comprenant en outre l'étape suivante : commencer à produire un second signal de déclenchement du second dispositif de contrôle sur la base du second déplacement prédéterminé, lorsque l'objet atteint une deuxième position désignée (S405).

7. Procédé selon la revendication 6, comprenant en outre l'étape suivante : cesser la transmission du second signal de déclenchement lorsque l'objet quitte une quatrième position désignée (S411).

8. Procédé selon la revendication 1, dans lequel les premières données de contrôle et les secondes données de contrôle sont des données de colonnes.

9. Appareil (50) de balayage et d'imagerie, comprenant :
un premier module de contrôle (505) destiné à produire des premières données de contrôle en fonction d'un premier déplacement prédéterminé de l'objet à contrôler, dans un premier intervalle de contrôle d'un premier dispositif de contrôle (107), entre une première position et une troisième position ;
un second module de contrôle (507) destiné à produire des secondes données de contrôle en fonction d'un second déplacement prédéterminé de l'objet, dans un second intervalle de contrôle d'un second dispositif de contrôle (107), entre une deuxième position et une quatrième position ; et
un module d'imagerie (509) destiné à convertir les premières données de contrôle en une première image de balayage, à convertir les secondes données de contrôle en une seconde image de balayage, et à fusionner la première image de balayage et la seconde image de balayage ;
dans lequel les premier et second modules de contrôle (505, 507) sont conçus pour produire lesdites premières et secondes données de contrôle en fonction de premier et second déplacements prédéterminés qui sont de grandeur égale,
**caractérisé en ce que** :
le premier intervalle de contrôle et le second intervalle de contrôle sont espacés l'un de l'autre, et
dans lequel le premier intervalle de contrôle est égal au second intervalle de contrôle.

10. Appareil selon la revendication 9, comprenant en outre : un module de déplacement (501) destiné à produire un signal de déplacement sur la base des informations de mouvement d'objet.

11. Appareil selon la revendication 9 ou 10, comprenant en outre : un module de commande (503) destiné à acquérir le premier déplacement prédéterminé et le second déplacement prédéterminé de l'objet ; à commencer à produire un premier signal de déclenchement du premier dispositif de contrôle sur la base du premier déplacement prédéterminé, lorsque l'objet atteint la première position désignée et n'a pas quitté une troisième position désignée ; et à commencer à produire un second signal de déclenchement du second dispositif de contrôle sur la base du second déplacement prédéterminé, lorsque l'objet atteint la deuxième position désignée et n'a pas quitté une quatrième position désignée.

12. Système (10) de balayage et d'imagerie, comprenant :
un appareil selon la revendication 9 ;
un codeur (103) destiné à obtenir des informations de déplacement de l'objet à contrôler ;
une unité de commande (105) destinée à régir le contrôle du dispositif de contrôle sur la base des informations de déplacement de l'objet ; et
un transporteur (101) destiné à transporter l'objet.
